# EUROPEAN PATENT SPECIFICATION

(11) **EP 1 351 567 B1**
(45) Date of publication and mention of the grant of the patent: **21.03.2012**
(21) Application number: 01272782.2
(22) Date of filing: 20.12.2001
(51) Int. Cl.: A01N 25/00

(54) **INSECTICIDAL COMPOSITION**
INSEKTIZIDE ZUSAMMENSETZUNG
COMPOSITION INSECTICIDE

(30) Priority: 04.01.2001 GB 0100189
(43) Date of publication of application: 15.10.2003
(73) Proprietor: Israely, Nimrod, 99770 Mesilat Tzion (IL)
(72) Inventor: Israely, Nimrod, 99770 Mesilat Tzion (IL)
(74) Representative: Becker Kurig Straus
(86) International application number: PCT/IL2001/001185
(87) International publication number: WO 2002/052937

(56) References cited:
- EP-A- 0 068 446
- EP-A- 0 203 413
- WO-A-85/04074
- WO-A-90/06680
- WO-A-94/09624
- US-A- 4 122 165
- US-A- 4 842 860
- BARSON G: "Laboratory Assessment of Different Methods of Applying a Commercial Granular Bait Formulation of Methomyl to Control Adult Houseflies (Musca domestica L.) in Intensive Animal Units" PESTICIDE SCIENCE, ELSEVIER APPLIED SCIENCE PUBLISHER. BARKING, GB, vol. 19, no. 3, 1987, pages 167-177, XP002086040 ISSN: 0031-613X
- DATABASE WPI Section Ch, Week 198114 Derwent Publications Ltd., London, GB; Class C03, AN 1981-24454D XP002195650 & JP 56 015204 A (RYUKYU OIL KK), 14 February 1981 (1981-02-14)

## Description

### FIELD OF THE INVENTION

This invention relates to insecticidal compositions useful for combating flying insects.

### BACKGROUND OF THE INVENTION

Conventional control of all flying pests, and insecticides in particular, is usually done by chemical control of the pests. Since the beginning of the 20^{th} century a few generations of chemicals for combating insects were used, for example, inorganic (lead arsenate, sodium fluorosilicate), chlorine-organic (DDT) and organophosphorous. New effective and environmentally safe, as well as new formulations for better compatibility insecticides, are constantly being developed. The commercial formulation may include, in addition to the active insecticide and stabilizers, also some kind of bait. The bait is either in the form of food, sex phagostimulant, attractants, or their combination. Despite the progress in new compounds and compositions, the mode of delivering the active material has remained much the same over time. The prevailing method for delivering the insecticides, despite its drawback, is by spraying the area with the most effective formulation. The apparent disadvantage of spraying is that it may be unsafe to the person carrying the spraying apparatus or to people in the vicinity of a sprayed area. Furthermore, spraying itself has a short-term non-specific effect, therefore, repeating cycles of spraying is needed. These repeated cycles, although overall provide satisfactory results, cause the use of large amounts of insecticides, of which only a small part is really effective (1-3 %). Part of the hazardous nature of pesticides in general emerges from this ineffective route for their application. Another problem associated with their use stems from the fact that the entire vegetation, i.e. the fruit, vegetable, branches and leaves, and its vicinity (ground, and air) is coated with the active insecticide, as well as the draft. Thus, although it is well understood that an alternative route should be used, no other better route has been found to be as effective as spraying.

Biological control of insects consists of either the use of natural pesticide, predators or genetic techniques such as the release of sterile fly males and/or females, counting on the fact that mating with the existing flies will lead to no progeny, and will thus ultimately decrease the insect population. Where the former approach may give good results subject to the known drawbacks of spraying (James R. Carey in California Agriculture, Jan.-Feb. 1992, pp. 13-17), the latter, is subject to technological and financial problems, and its success is problematic for many species (James R. Carey in California Agriculture, Jan.-Feb. 1992, pp. 13-17).

Traps are another alternative approach to spraying. Means for attracting the flies to the traps consist of color, shape and attractants. The classical attractants are food or sex attractants. Color may also be an attractant as disclosed in IL 103,629 where a yellow panel and a red sphere were found to be effective for attracting flies. After being attracted, the flies are eliminated either by physically being trapped within the trap, or by initially covering the trap's panel with glue, thus the attracted flies are stuck after their approach.

These two approaches are associated with drawbacks. In the case of physically trapping the insects, the insects are indeed attracted to the near vicinity of the trap, however, very frequently do not find their way into the trap. If the entrance is made easy enough for the approaching insects then their way out is also facilitated. In case the flies are stuck in the glue, the efficiency is greatly reduced due to the fact that the glue is very non-selective. Thus dust, leaves and other non-target insects adhere to the trap in addition to the desired flies.

Alternatively, the trap may be covered with a poisonous material and the insects are exterminated as a result of contact or consumption of an insecticide. US 5,359,808 discloses such a trap consisting of a bag soaked prior to its use with insecticide where the approaching flying insects are exterminated upon contact with the bag. The attractants are immersed in water, the water serving as a source of humidity thereby being themselves an additional attractant The use of such a trap is restricted to hot periods. Furthermore, the humidity has to be replenished in order to stay effective for long periods. Thus, to date, traps were found to be ineffective in large areas of vegetation, and their use is preferred in small confined areas.

### SUMMARY OF THE INVENTION

The present invention is based on the findings that a novel composition may be used for combating flying insects. The novel composition includes stabilizers, in addition to the effective insecticide and attractant Thus, the present invention provides a novel insecticidal composition for controlling flying insects upon contact of the composition with humidity, according to claim 1

The at least one attractant is chosen from the group comprising of proteins, carbohydrates, feed stimulants, ammonia releasing source, pheromones, kairamones or mixtures thereof. Such a composition may also be used in association with alternative routes to conventional spraying. The results of using the novel composition of the present invention in such alternative routes, as measured by the percentage of infected fruit by insects, are compatible to those of spraying, where the overall quantity of the insecticides used by the present composition is much lower.

Thus the present invention further provides an effective and environmentally safe route for combating flying insects. This is achieved by using the insecticidal composition in association with a suitable carrier. A suitable carrier may be any conventional carrier such as traps or posts, situated at appropriate distances within the vegetation, preferably the trap disclosed in IL patent application. No. 129,634 (hereinafter "Nimrod Eliminator"). The environmental impact of the insecticide used is minimal if present at all since the overall amount of the at least one insecticide is very low. Upon interaction of the novel composition with humidity, the composition is slowly released from its storage and becomes available for action. The humidity may be either naturally occurring humidity or artificially obtained by irrigation. Release of the composition is temperature independent and the composition may be used at all seasons. The attracted insects are poisoned by swallowing, digesting said composition or by the mere contact with the composition.

The invention still further provides an efficient and environmentally safe route for combating flying insects. This is achieved by spraying the insecticidal composition as baits, where its freshness, hence its ability to attract insects, is replenished with each renewed contact with humidity.

### DETAILED DESCRIPTION OF THE INVENTION

As stated above, the present invention deals with a novel insecticidal composition. The composition is a slow release composition and is formulated in a manner, which enables its use, both in association, with traps or a suitable carrier or by spraying as baits. The insecticidal composition may be used efficiently against *Tephritidae* and with some suitable modifications, against many other flying insects such as *Cicadoidea, Aphidoidea, Diptera, Cacopsylla bidens, Empoasca lybica, Edwardsina rosae,* and *Lyonetia clerkella.* The insecticidal composition of the present invention contains in addition to the active insecticide at least one attractant for attracting flies to the composition and at least one stabilizer which may interact with humidity. Agricultural-wise, the most destructive single pest is the Mediterranean fruit fly (*Ceratitis capitata*). A specific insecticidal composition may be formulated such that it will best attract these flies. However, manor modifications in several of its constituents may be made in order to direct the composition against other families of insects. In particular with regards to the Mediterranean fruit fly, it was found that the female, prior to oviposition must consume carbohydrates and proteins in order to lay her eggs. Thus these nutrients in addition to serving as essential food source may also serve as attractants to a certain extent. In addition to the essential nutrient composition, the insecticidal composition includes an attractant, preferably some source of ammonia known to attract insects. The attractant may also further include a pheromone, kairamone or some other attractant for the kind of insect that has to be exterminated or a combination thereof. Such an insecticidal composition was found to give very effective control of the Mediterranean fruit fly without effecting other beneficial insects such as bees. The attractant(s) and insecticide(s) in order to form the desired slow-release insecticidal composition are mixed together with a suitable stabilizer that may interact with humidity. The resulting composition is a viscous composition, which in one option according to the present invention may be placed inside a pocket of a suitable trap or any other convenient carrier capable of conducting the same action. Upon an interaction between the viscous composition placed in the suitable carrier, and naturally occurring humidity, the outer layer of the composition looses its viscosity and begins to diffuse out of the pocket. As the loss in viscosity occurs only at the interface, at each contact with external humidity only a small amount of the composition is released. The prerequisite of such a stabilizer is that the composition would not diffuse under warm conditions, only upon an interaction with humidity. Furthermore, the loss of viscosity at the interface is moderate, and the resulting diffusion is slow. The released composition slowly diffuses out of the pocket and spreads over the entire area of the trap or the carrier as a result of gravity and capillarity. Thus contrary to numerous slow-release compositions, the slow-release of present composition is temperature independent. Furthermore, the attracting composition is spread all over trap or the suitable carrier creating a large attracting area much bigger than the one created by the attractant released from a capsule. Any suitable stabilizer, which suits the prerequisites, as outlined above, may be used. Thus, any stabilizer that can expand upon contact with the environmental humidity under normal conditions may be used. Typically, this includes any naturally occurring polymer or an inorganic polymer capable of expanding upon contact with humidity, such as polysiloxanes, polyethers, cellulose derivative, gelatin, tectin or mixtures thereof. Naturally occurring humidity like rain or dew is sufficient for activating the composition and for inducing the release of the insecticidal composition, although artificial humidity from irrigation or even directed irrigation aimed at activating the composition may also be used. Such artificial irrigation is preferable in cases where the environment is especially dry. It should be understood that excessive amounts of humidity (strong rain or outstanding quantities of dew) might result in an enhanced release of the composition, which may eventually lead to occasional dripping. Such dripping is confined to the small area below the appropriate carrier and may be beneficial for providing a fresh quantity of the insecticidal composition.

It should be noted that the composition might also be in dry form such as tablets or powder. Upon each contact of the outer layer of the composition with humidity the outer layer dissolves and begins to diffuse out and spread on the entire surface of the carrier by gravity or capillarity.

It should further be noted that depending on the environmental circumstances, and also in case a more precise control of the release profile is desired, an additional type of stabilizer may be added. In such cases a stabilizer capable of solidifying the composition upon contact with humidity may be added. Thus the composition may further comprise humidity coagulating factors and/or solidifying factors in order to control the viscosity of the composition when in contact with the environmental humidity. A predetermined selection of the relative amounts of each stabilizer, coagulating and expanding, enables to direct the release of the composition at predetermined periods. For example, in case only an expanding stabilizer is added, then only in periods of humidity (during the night, rain or irrigation), the composition will begin loosing its viscosity at the interface. In case only a coagulating stabilizer is added, the presence of humidity will lead to further solidification of the composition. Thus these two negating stabilizers may be added at various relative concentrations to yield a composition that would be released at the desired periods.

The present composition is an efficient alternative to spraying the entire vegetation and poisoning the fruit, vegetable, branches and leaves. Spaciously situated traps or suitable carriers of the composition of the present invention are placed in the area to be protected. Each such carrier is mounted with a suitable amount of the composition. Typically from about 15 to about 30 traps per 1000 m² are used, and the trap should be reloaded once in about 2 to 4 months.

An alternative route for application of the insecticidal composition of the present invention is by spraying as baits. The sprayed bait particles may be sprayed humid or may be sprayed dry and activated by contact with natural or artificial humidity. Consecutive contact with humidity regains freshness and "reactivates" the composition. Thus the composition is effective for longer periods of time and there is no restriction to the time of its application, since it may always be reactivated.

The use of the composition of the present invention in connection with its mode of action and the suitable stabilizer(s) is not limited to certain periods of the year and may be used all year long. The attracted insects are exterminated by either digesting or coming into contact with the lethal composition on the trap or the suitable carrier, however, the trap or the carrier themselves stay clean for the next flock of insects and the next portion of diffusing composition. The combination of the viscous composition or the dry formulation and the humidity is the key for keeping a constant concentration of an effective amount of available insecticidal composition at the entire area of the trap or the suitable carrier. Continuous contact with naturally or artificially applied humidity replenishes the trap or carrier with fresh active insecticidal composition released from the pocket or carrier. In contrast to previous insecticidal compositions used in association with traps, the present insecticidal composition is stabilized and not effected by heat.

The insecticidal composition of the present invention may typically have the following ratio between its various components (w/w): 30 to 70% carbohydrate; 20 to 60 % protein source; 0.001 to 30% insecticide; 0.00002 to 40 % of a chemical attractant (depending on. the nature of the attractant) and 0.01 to 10% stabilizer. A typical composition is given in Example 1.

### Example 1:

13 Kg of A carbohydrate source (64.5 %), 6 Kg of a Buminal^{™} (protein hydrolisate) (30%), 20 ml of Tracer^{™} (Spinosad) (0.1%), 0.94 Kg Borax (4.67%) and 0.1.7 Kg Sodium salt of carboxy-methyleellulose (0.84%) were mixed together to give an insecticidal composition. An amount of between about 30 to about 1.50g of the composition is placed in each pocket of the "Nimrod Eljminator".

In a similar manner to Example 1, the following insecticidal compositions are formulated where the amount of the carbohydrate, Buminal^{™} and Borax are practically the same.

| **Example No.** | Insecticide | Concentration |
|---|---|---|
| | | |
| 2 | Dimethoate | 0.2% |
| 3 | Malathion | 4.2 % |
| 4 | Cryocide¹ | 2 % |
| 5 | Azadirachtin | 1 % |
| 6 | Byfitos² | 3% |
| 7 | SureDay | 4 % (phloxine); 3 % (uranine) |
| 8 | Fenthion | 0.1 % |
| 9 | Lufenuron | 5000 ppm |
| 10 | Triflumuron | 10,000 ppm |
| 11 | Borax³ | 5 % |

| | | |
|---|---|---|
| ¹Hexafluoroaluminate (94 %); ²Pyrethrum + Rotenone; ³Borax Decahxydrato-(Disodium Tetraborate Decahydrate)-Na₂B₄O₇·10H₂O | | |

It should be noted that pheromone in an amount of 0.00001 % to 0.03 % may be added to the insecticidal composition as additional attractants.

The overall amounts of insecticide used with a composition of the present invention when applied in association with the "Nimrod Eliminator" compared with the amounts used in conventional spraying methods is shown in Table I. The displayed quantities arising from the use of the present insecticidal composition are displayed in bold and represent use of 30 traps in 1000 m². The comparative compositions of prior art describe normal quantities used in aerial and ground sprays.

**Table I:**

| Plantation | Insecticide | Concentration (%) | Amount per 1000 m (Kg/l) | Number of Sprays | Overall amount (Kg/l) |
|---|---|---|---|---|---|
| Apple | ROGOR^{™} | I 0.1 | 0.2 | 16 | 3.2 |
| **Apple** | **ROGOR^{™} (Nimrod Eliminator)** | **0.1** | | | **0.0045** |
| Nectarine | ROGOR^{™} | 0.1 | 0.2 | 10 | 2.0 |
| **Nectarine** | **ROGOR^{™} (Nimrod Eliminator)** | **0.1** | | | **0.0045** |
| Apricot | ROGOR^{™} | 0.1 | 0.2 | 5 | 1.0 |
| **Apricot** | **ROGOR^{™} (Nimrod Eliminator)** | **0.1** | | | **0.0045** |
| Apple | Malathion (25 A.R.) | 5 | 0.15-0.2 | 24 | 3.6-6.0² |
| Apple | Malathion (Technical) | 95 | 0.025 | 16 | 0.4 |
| **Apple** | **Malathion (25 A.R) (Nimrod Eliminator)** | **5** | | | **0.2²** |
| Apple | ³TRACER^{™} | 0.02 | 0.04 | 16 | 0.64 |
| **Apple** | **TRACKER^{™} (Nimrod Eliminator)** | **0.2** | | | **0.006** |

| | | | | | |
|---|---|---|---|---|---|
| ¹Dineihoate. ²The actual quantity should be divided by 4 as this formulation contains only 25% Malathion. ³Spinosad. | | | | | |

The overall amount of the insecticide used with the composition placed in the traps for ROGOR^{™} (Dimethoate) and TRACER^{™} (Spinosad) is between about 220 to about 710 times less than the amount used by the conventional spray methods. In addition to the use of a significant smaller amount of insecticide, the insecticide is not sprayed on the entire vegetation (locus, leaves, fruit etc.) and contamination of the ground including draft and air are avoided. Thus, the ecological advantage of using the insecticide composition in association with the "Nimrod Eliminator" is clearly demonstrated. Furthermore, the use of the composition has an economical, benefit. Aerial spraying is expensive both with regards to the quantities of insecticidal used and from the nature of their action. Ground spraying cause damage to a. certain extent to the crops.

The effectiveness of the compositions used together with the "Nimrod Eliminator" in combating Mediterranean fruit fly compared to conventional cover and bait spraying are shown in Tables II and III. Table II displays results done over a period of four years (1997-2000) at a certain location (Kibbutz Tzuba at the Judean Hills).

**Table II**

| **Year** | **Crop** | **Varieties** | **% Damage in Nimrod Eliminator (1000m²)** | **% Damage in sprayed plots (1000m²)** | **⁴Max. fly catches** |
|---|---|---|---|---|---|
| **1997** | Apple | Muli-Delicious | 1-2 (1) | 5-15 (19) | 28 |
| | | Gala | 0 (1) | 0 (9) | |
| | | Golden-Delicious | 0 (1.5) | 0.5 (20) | |
| | | Red-Delicious | 0 (1) | 0 (14) | |
| | | Orliance | 0 (0.5) | 0 (4) | |
| **1998¹** | Apple | Mull-Delicious | 0.3 (1) | 5-15 (19) | 35 |
| | | Gala | 0 (3) | 0 (9) | |
| | | Golden-Delicious | 0 (4.6) | 5-50 (50) | |
| | | Red-Delicious | 0 (5) | 0 (14) | |
| | | Orliance | 0 (1) | 0 (4) | |
| | Nectarine | Flamekissed | 0 (10) | 0 (10) | 50 |
| **1999** | Apple | Muli-Delicious | 0.3 (1) | 5-15 (19) | 1 |
| | | Gala | 0 (3) | 0 (9) | 53 |
| | | Golden-Delicious | 0 (4.6) | 0.5-1 (50) | |
| | | Red-Delicious | 0 (5) | 0 (14) | |
| | | Orliance | 0 (1) | 0 (4) | |
| | Apple | Golden-Delicious | 5-20 (21) | 1 (8) | 70 |
| | Nectarine | Flamekissed | 0 (3) | 0 (10) | 55 |
| | Pear | Gentil | 0 (0.25) | 0 (0.2) | 20 |
| | | Spadochini | 0 (2) | 0 (1.3) | 4 |
| | | Costia | 0 (1.4) | 0 (1.4) | |
| | | Spadona | 0 (8.5) | | |
| | Sweet- | 7 varieties | 0-2 (7) | 2 | 88 |
| | Cheery¹ | | | | 5 |
| **2000** | Apple | Muli-Delicious | 1 (1) | - | 46 ³N.E. -S |
| | | Gala | 2 (3) 2 (9) | | 45 ³N.E. 1S |
| | | Golden-Delicious | 0 (4.6) 0-3 (50) 137 | | 137 ³N.E. |
| | | Red-Delicious | 0 (5) | 0 (14) | 3S |
| | | Orliance | 0 (1) | 0 (4) | |
| | Nectarine | Flamekissed | 0 (3) | 0 (10) | 13 ³N.E. 1S |
| | Pear | Gentil | 0 (0.25) | 0 (0.2) | 22 ³N.E. |
| | | Spadochini | 0 (2) | 0 (1.3) | 3S |
| | | Costia | 0 (1.4) | 0 (1.4) | |
| | | Spadona | 0 (8.5) | 0 (7.5) | |

| | | | | | |
|---|---|---|---|---|---|
| ¹ During 1998, only 20 traps per 1000m² were used, otherwise 30 traps were used. ² During the year 2000 by conventional methods the damage was 0-2 %, although the number of flies was 35/week rather than 885. ³ N.E.- Number of flies trapped in Nimrod Eliminator plot, S - Number of flies trapped in a conventional sprayed plot. ⁴Maximum flies catches per week in Trimedlure traps during the period in which the fruit is sensitive to Mediterranean fruit fly attack | | | | | |

Table III displays results done during the year 2000 at various locations in Israel.

**Table will:**

| **Site** | **Crop** | **Varieties** | **%Damage Nimrod Eliminator (1000 m²)** | **with 1 Other 1 Methods** | **Method** | **Max. flies catches/week in Trimedlure traps** |
|---|---|---|---|---|---|---|
| **Neve-Ya'ar** | Apricot | Several varieties | 0%(2) | 1.5%(2) | Spray | 1 |
| | Nectarine | | 1% (2) | 61.5% (0.5) | No treatment | 36 |
| | Peach | | 2.7% (2) | 40% (0.5) | No treatment | |
| **Sosia** | Apricot | Ra'anana | 2.5% (2) | 15% (2) | Bio-Lure | 8 |
| | Vineyard | | 8 %(1) | 25-40 %(1) | Bio-Lure | 139 |
| **Ofra** | Sweet -Cheery | Several varieties | 0% (2) | 0% (2) | Bio-Lure | 43 |
| **Kibbutz Lavi** | Litchi | Maoricios | 0% (5) | 0% (30) | Spray | 145 |
| **Manara A** | Apple | Muli-Deli | | 7.3% (7) | Bio-lure | 13 |
| | | cious | | 10% (3) | ground bait | |
| | | Gala | | 0% (1) | spray | |
| | | Granny-Smith | 0% (3.2) | 0% (30) | Spray | |
| **Manara B** | Apple | Muli-Deli cious | 0.8% | 0% (11) | Spray | 3 |
| | | Star King | | 0% (14) | Spray | |
| | | Granny Smith | 0% (2.4) | 0% (5) | | |
| **Manara C** | Apple | Jonathan | 0%(0.7) | 0% (1) | Spray | 3 |
| | | Golden Delicious | 0% (0.13) | 0%(1) | Spray | |
| | | Star King | 0% (1.5) | | | |
| | | Granny-S mith | 0% (2) | | | |
| **Sde Boker (1)** | Olive | Bamea | 0.16% (4) | 0.14% (4) | Eco Traps | 1 |
| | | | | 0.04% (4) | Yellow Sticky | |
| | | | | 50% (4) No treatment | | |
| | | | | 0.22% (10) | Spray | |
| **Nes Harim** | Nectarine | Fantasia | 0.5% (1.5) | 30% (10) | Spray | 52 |
| **Kfar** | Persimmon | Izo | | | No treatment | 42 |
| **Baruch** | | Trirnuph | 0% (0.1) | - | | |
| **Kfar Bilo** | Carambula | Unknown | 0% (2) | 0% (2) | Bio Lure | 50 |

| | | | | | | |
|---|---|---|---|---|---|---|
| ⁽¹⁾The traps were used for control of the fruit fly *Bactrocers oleae* (Dacus). | | | | | | |

Thus, the insecticidal composition, of the present invention, when used in association with "Nimrod Eliminator" are not only pronouncedly more effective than commercially used trap, but also display a comparable net result to conventional spraying in combating Mediterranean fruit fly in various vegetation.

Important to note is that the composition of the present invention may also be used effectively, together with the "Nimrod Eliminator", in combating additional flying insects, other than Mediterranean fruit fly, in a manner comparable to spraying. Such results were obtained while carrying the experiment, the results of which are presented in Table III.

In the first site, Neve-Ya'ar, as a result of the "Nimrod Eliminator" containing the insecticidal composition, there was no damage from. *empoasca spp.* or any other leave pests.

In the second site, Sosia, two adjacent 1000 m² areas of vineyard covered with insect-proof net, were treated against Medfly comparing the efficiency of the conventional methods to the "Nimrod Eliminator". The "Nimrod Eliminator" had demonstrated superior results controlling the Medfly (table III). Furthermore, other pests were also exterminated and no further treatment was needed. Contrarily, the plot having the BIOLURE^{™} trap, in addition to the fact that the BIOLURE^{™} is less elective in treating Medfly, the plot had to be intensively treated against the leaf pest *empoasca lybica.*

Referring back to Table II, since the beginning of the use of the "Nimrod Eliminator" in Kibbutz Tzuba, there was almost no need to further treat the Pear against *Cacopsylla bidens* while in an adjacent plot treated in a conventional manner such a treatment was necessary. Likewise, in the Nectarine plot since the use with "Nimrod Eliminator" there was no need to further spray against *Empoasca spp.* or *Thysanoptera,* while in an adjacent plot treated in a conventional manner such. a treatment was necessary.

Although the invention has been described in conjunction with specific embodiments, it is evident that many alternatives and variations will be apparent to those skilled in the art in light of the foregoing description. Accordingly, the invention is intended to embrace all of the alternatives and variations that fall within the scope of the appended claims.

## Claims

1. A viscous insecticidal composition for controlling flying insects upon contact of said composition with humidity, said composition comprising:
(i) 0.00002 to 95% (w/w) of at least one attractant selected from the group comprising of proteins, carbohydrates, feed stimulants, an ammonia releasing source, pheromones, kairamones or mixtures thereof;
(ii) 0.001 to 30% (w/w) of at least one insecticide; and
(iii) 0.01 to 10% (w/w) of at least one stabilizer being a polymer capable of expanding upon contact with humidity selected from cellulose derivative, gelatine, tectin or mixtures thereof.

2. An insecticidal composition according to claim 1, wherein the insecticide is selected from spinosad, dimethoate, malathione and borax.

3. Use of a viscous insecticidal composition according to claim 1 or 2 for controlling flying insects upon contact of said composition with humidity.

4. The use according to claim 3, wherein the composition is used in association with a carrier being a trap, an eliminator or a post.

5. The use according to any one of claims 3 to 4 wherein the flying insect is a Mediterranean fruit fly.

6. The use according to claim 3, wherein the composition is used by spraying baits.

7. A method for controlling flying insects comprising or treating the area to be protected against the flying insects with an effective amount of the insecticidal composition of any one of claims 1 to 2.

8. The method according to claim 7, wherein the flying insect is a Mediterranean fruit fly.

9. The method according to claims 7 or 8, wherein the insecticidal composition is applied in association with suitable carriers, preferably suitable traps/eliminators.

10. The method according to claims 7 or 8, wherein the insecticidal composition is applied by spraying baits.

11. The method according to any one of claims 7 to 10 wherein the insecticidal composition or the suitable carrier is subjected to artificial humidity.

## Patentansprüche

1. Viskose insektizide Zusammensetzung zur Kontrolle von Fluginsekten beim Kontakt der Zusammensetzung mit Feuchtigkeit, wobei die Zusammensetzung umfasst:
(i) 0,00002 bis 95 % (Gew./Gew.) von mindestens einem Lockmittel, ausgewählt aus der Gruppe bestehend aus Proteinen, Kohlenhydraten, Futter-Stimulans, einer Ammonium freisetzenden Quelle, Pheromone, Kairamone oder Gemische davon;
(ii) 0,001 bis 30 % (Gew./Gew.) von mindestens einem Insektizid; und
(iii) 0,01 bis 10 % (Gew./Gew.) von mindestens einem Stabilisierungsmittel, das ein Polymer ist, das sich bei Kontakt mit Feuchtigkeit ausdehnt, ausgewählt unter Cellulosederivat, Gelatine, Tectin oder Gemischen davon.

2. Insektizide Zusammensetzung nach Anspruch 1, worin das Insektizid ausgewählt ist unter Spinosad, Dimethoat, Malathion und Borax.

3. Verwendung einer viskosen insektiziden Zusammensetzung nach Anspruch 1 oder 2 zur Kontrolle von Fluginsekten bei Kontakt der Zusammensetzung mit Feuchtigkeit.

4. Verwendung nach Anspruch 3, wobei die Zusammensetzung zusammen mit einem Träger verwendet wird, der eine Falle, ein Ausscheider oder ein Pfosten ist.

5. Verwendung nach einem der Ansprüche 3 bis 4, wobei das Fluginsekt eine Mittelmeer-Fruchtfliege ist.

6. Verwendung nach Anspruch 3, wobei die Zusammensetzung mittels Sprühköder verwendet wird.

7. Verfahren zur Kontrolle von Fluginsekten, welches umfasst, Behandeln des gegen Fluginsekten zu schützendes Bereichs mit einer wirksamen Menge der insektiziden Zusammensetzung nach einem der Ansprüche 1 bis 2.

8. Verfahren nach Anspruch 7, wobei das Fluginsekt eine Mittelmeer-Fruchtfliege ist.

9. Verfahren nach Anspruch 7 oder 8, wobei die insektizide Zusammensetzung zusammen mit geeigneten Trägern, vorzugsweise geeigneten Fallen/Ausscheidern verwendet wird.

10. Verfahren nach Anspruch 7 oder 8, wobei die insektizide Zusammensetzung mittels Sprühköder eingesetzt wird.

11. Verfahren nach einem der Ansprüche 7 bis 10, wobei die insektizide Zusammensetzung oder der geeignete Träger einer künstlichen Feuchtigkeit ausgesetzt wird.

## Revendications

1. Composition visqueuse insecticide pour contrôler les insectes volants au contact de ladite composition avec l'humidité, ladite composition comprenant :
(i) 0,00002 à 95% (pds/pds) d'au moins un attractant choisi dans le groupe comprenant les protéines, les glucides, les stimulants alimentaires, une source libérant de l'ammoniac, les phéromones, les kairomones ou les mélanges de ceux-ci ;
(ii) 0,001 à 30% (pds/pds) d'au moins un insecticide ; et
(iii) 0,01 à 10% (pds/pds) d'au moins un stabilisant qui est un polymère capable de s'expanser au contact avec l'humidité choisi parmi un dérivé de la cellulose, la gélatine, la tectine ou les mélanges de ceux-ci.

2. Composition insecticide selon la revendication 1, dans laquelle l'insecticide est choisi parmi le spinosad, le diméthoate, le malathion et le borax.

3. Utilisation d'une composition visqueuse insecticide selon la revendication 1 ou 2 pour contrôler les insectes volants au contact de ladite composition avec l'humidité.

4. Utilisation selon la revendication 3, dans laquelle la composition est utilisée en association avec un support qui est un piège, un éliminateur ou un poteau.

5. Utilisation selon l'une quelconque des revendications 3 à 4, dans laquelle l'insecte volant est une mouche méditerranéenne des fruits.

6. Utilisation selon la revendication 3, dans laquelle la composition est utilisée par pulvérisation sur des appâts.

7. Procédé de contrôle des insectes volants comprenant le traitement de la zone à protéger contre les insectes volants avec une quantité efficace de la composition insecticide selon l'une quelconque des revendications 1 à 2.

8. Procédé selon la revendication 7, dans lequel l'insecte volant est une mouche méditerranéenne des fruits.

9. Procédé selon les revendications 7 ou 8, dans lequel la composition insecticide est appliquée en association avec des supports appropriés, de préférence des pièges/éliminateurs adaptés.

10. Procédé selon les revendications 7 ou 8, dans lequel la composition insecticide est appliquée par pulvérisation sur des appâts.

11. Procédé selon l'une quelconque des revendications 7 à 10, dans lequel la composition insecticide ou le support approprié est soumis une humidité artificielle.
